# EUROPEAN PATENT APPLICATION

(11) **EP 2 763 092 A1**
(43) Date of publication of application: **06.08.2014**
(21) Application number: 14150431.6
(22) Date of filing: 08.01.2014
(51) Int. Cl.: G06Q 10/10, G06Q 50/00, H04L 29/08

(54) **Virtual meeting lobby for waiting for an online event**

(30) Priority: 31.01.2013 US 201313755204
(71) Applicant: Sony Corporation, Tokyo 108-0075 (JP)
(72) Inventor: Young, David Andrew, San Diego, CA California 92128 (US); Agnihotri, Tanmay, San Diego, CA California 92128 (US); Sainte-Claire, David Charles, Chula Vista, CA California 91910 (US); Gunatilake, Priyan, San Diego, CA California 92131 (US); Sugiyama, Nobukazu, San Diego, CA California 92127 (US)
(74) Representative: Jackson, Jonathan Andrew

(57) **Abstract**

A host device can establish a date and time for an online event such as a movie and send invitations out to join viewing the movie to, e.g., friends on a social network. Accepting friends, along with the host, can enter a theater page prior to the start time to view thumbnails of related recommended movies and can also enter a lobby page to chat and view who else has been invited to attend the movie.

## Description

The present application relates generally but not exclusively to virtual meeting lobbies for waiting for online events.

Despite wide ranging network applications, a need exists to bring people together online to share in a common experience such as movie going that closely mimics attending movies in person with a group of friends, including providing a virtual lobby that gives service providers the opportunity to advertise their products just as at the theater.

Accordingly, a device includes a computer processor, a display controlled by the processor, and a computer readable storage medium accessible to the processor and bearing instructions which when executed by the processor to cause the processor to present on the display a first user interface (UI) presenting a selector element which when selected provides an option to host, at a later time, an audio video event online. The processor presents on the display date and time entry elements enabling a user to select a date and time the event is desired to start, and also presents on the display an invitee entry element enabling a user to enter invitees to the event. The processor sends to the invitees event information along with an invitation to access the event online at the date and time date. Also, the processor configures the device to access a lobby page on a computer network that is also accessible to accepting invitees. The lobby page includes images of accepting invitees who also are viewing the lobby page, an image representing the event, an indication of a countdown to the time the event is desired to start, and a chat window facilitating computer chat among viewers of the lobby page.

In some examples the event is an online movie and the invitee entry element enables a user to select invitees from a social networking computer site.

If desired, the processor can receive acceptances of the invitations and present indications thereof on the host device. The first UI may present a price box informing a user of a cost of the movie. The cost can be a per participant cost and the first UI can indicate that the per participant is reduced with larger numbers of participants.

In example implementations the processor configures the device to access a theater page on a computer network also accessible to accepting invitees. The theater page shows thumbnails of events other than the selected event, some of which may be accompanied by an indication of a future event time for an event associated with the thumbnail indicating that an online event has also been scheduled for the event associated with the thumbnail. The theater page may further include advertisements targeted to an invitee to the audio video event online at least in part using information related to the invitee. The information related to the invitee can be obtained from a social networking site.

In another aspect, a device includes a computer processor, a display controlled by the processor, and a computer readable storage medium accessible to the processor and bearing instructions which when executed by the processor to cause the processor to, responsive to receiving an invitation from a host device to attend an online event, present on the display a first user interface (UI). The first UI includes an image related to the online event along with an image or icon or other symbol associated with a user host of the host device and a message that the host has invited a user associated with the device having a display associated with the processor to join the online event. The first UI can also include a scheduled time of the event, a list of people who have already accepted to join the event, and an "accept" selector element selectable to cause a message to be sent indicating acceptance of the invitation.

In another aspect, a method includes using a host computing device for selecting a movie, a show time, and one or more invitees. Responsive to selecting one or more invitees, an invitation is sent one or more respective guest devices associated with the respective one or more invitees to join in viewing the movie at the show time. Responsive to an invitee returning an acceptance of an invitation to join in viewing the movie, information indicating that the invitee has accepted to join is presented on the host device. Before the show time, the host device is configured to access a lobby page hosted on a network, and the lobby page includes information related to the movie. At the show time, the movie is streamed to accepting invitees.

Various respective aspects and features of the invention are defined in the appended claims. Combinations of features from the dependent claims may be combined with features of the independent claims as appropriate and not merely as explicitly set out in the claims.

Embodiments of the invention will now be described with reference to the accompanying drawings, throughout which like parts are referred to by like references, and in which:
Figure 1 is a block diagram of an example system in accordance with present principles;
Figures 2-7 are screen shots of user interfaces (UIs) in a first example embodiment;
Figure 8 is a flow chart of example logic appertaining to the Uls of Figures 2-9; and
Figures 9-11 are screen shots related to a second embodiment applied to a movie selection site.

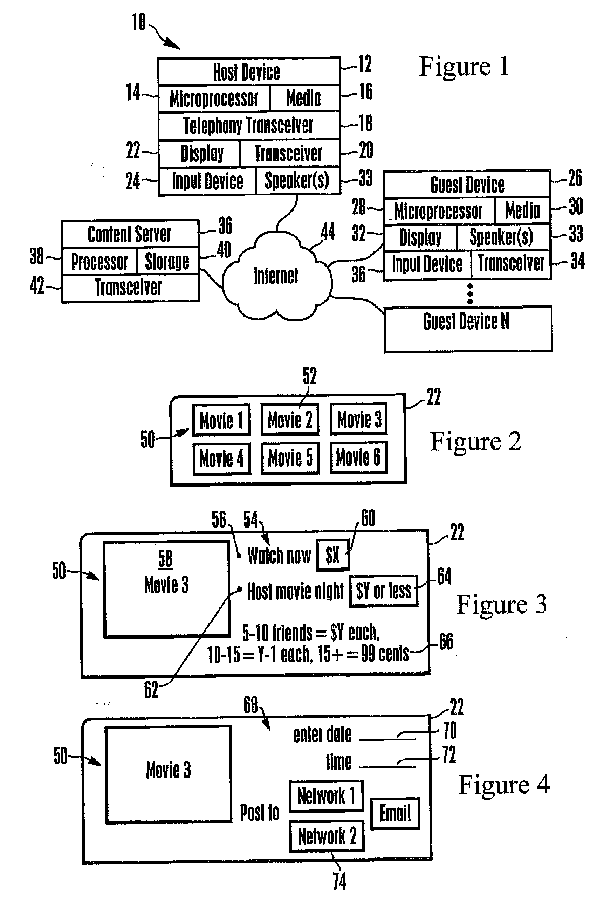

Referring initially to Figure 1, a system 10 includes a host device 12 that may be implemented by a wireless telephone. The device 12 may include a processor 14 accessing a disk-based or solid state computer readable storage medium 16 to execute logic for controlling a wireless telephony transceiver 18, such as but not limited to a code division multiple access (CDMA) transceiver, a global system for mobile communication (GSM) transceiver, an orthogonal frequency division multiple (OFDM) transceiver, or other appropriate telephony transceiver. The processor 14 may communicate with other devices in the system 10 through one or more transceivers 20 (only one transceiver shown for clarity), which may be a wireless transceiver such as but not limited to WiFi transceiver, Bluetooth transceiver, wired or wireless modem, and the like. The device 12 may further include a display system 22 for presenting visual and/or audio data to a human user, and an input device 24, such as a keypad and/or touch screen capability within the display system 22.

Note that the host device 12 may be implemented by other computing devices, including, without limitation, a PC, laptop, or notebook computer, a slate computer, a TV, a home entertainment controller, a game console, a personal digital assistant, etc. The same is true of the below-described guest devices.

A guest device 26 which may be implemented by a tablet or laptop or notebook computer may include a processor 28 accessing a disk-based or solid state computer readable storage medium 30 to execute logic for controlling a video display 32 to output data, typically in the form of images and user interfaces, thereon. One or more audio speakers 33 can also be provided. The processor 28 may communicate general data with other devices in the system 10 through one or more transceivers 34 (only one transceiver shown for clarity), which may be a wireless transceiver such as but not limited to WiFi transceiver, Bluetooth transceiver, and the like. The processor 28 may receive user input from one or more user input devices 36 such as keyboards, keypads, mice, trackballs, other point-and-click devices, voice recognition software operating on audio captured by a microphone (not shown), touch capability of the display 32, and so on. The system 10 may include "N" guest devices as shown, wherein "N" is an integer.

A content server 36 that sources online movies or other online content may include one or more processors 38 accessing one or more storage devices 40 to supply, through one or more computer transceivers 42, content to the devices 12, 26 through the Internet 44.

Figure 2 shows a UI 50 that can be presented on the host device display 22 which depicts plural thumbnails 52 each representing a respective audio video program such as a movie. A thumbnail 52 can be selected by means of, e.g., a point and click device 24 or touch screen capability of the display 22 to cause the UI 54 of Figure 3 to appear. Note that the UIs 50, 54 of Figures 2 and 3 may be populated with thumbnails and alpha numeric information in a standalone mode or by a third party movie service such as Sony's Crackle ™.

The UI 54 of Figure 3 gives the host user an option 56 to immediately watch the selected movie from the UI 50 of Figure 2. Note that a thumbnail image 58 of the selected movie may be presented along with, if desired, movie information overlaid on the image, such as title, actors, rating, movie run time, and a brief description of the movie content. Along with the option 56 a price box 60 can be presented alongside to inform the user of the cost for watching the movie immediately. Responsive to the option 56 being selected, a pay screen may be presented prompting the user to enter, e.g., a credit card number, upon acceptance of which the movie is streamed immediately to the host device 12 from, e.g., the content server 36. Or, the pay screen may prompt the user to enter subscription information if appropriate.

On the other hand, the user may select an option 62 to host, at a later date, a movie night online according to principles explicated further below. Alongside the "host movie night" option 62, a price box 64 may be presented informing the user of the cost of the movie. In one example, the cost presented in the box 64 is the cost per accepting participant. In another embodiment the cost may be a total group cost. In some embodiments the cost may indicate a cost "or less" with explanation 66 being provided that the cost per participant is reduced with larger numbers of participants. For instance, the cost per participant may be a first cost for five or less participants, a second cost per participant for five to ten participants, and yet a third cost for more than ten participants, with the first cost being higher than the second cost which is higher than the third cost. In general, the explanation 66 advises that each participant pays less the more participants there are.

In the standalone mode, selection of the "host movie night" option 62 causes the UI 68 of Figure 4 to appear on the host device display 22. The host user enters the date and time the movie is desired to start in date and time fields 70, 72. The host user then enters a list of intended invitees to participate in the movie night. This may be done by entering individual email addresses or other network address of each invitee, or it may be done by selecting a post selector 74 which causes an invitation to be sent to every member of a group, e.g., to every friend on a social networking site (two social networking site selectors shown in Figure 4) or to every name in an email address book.

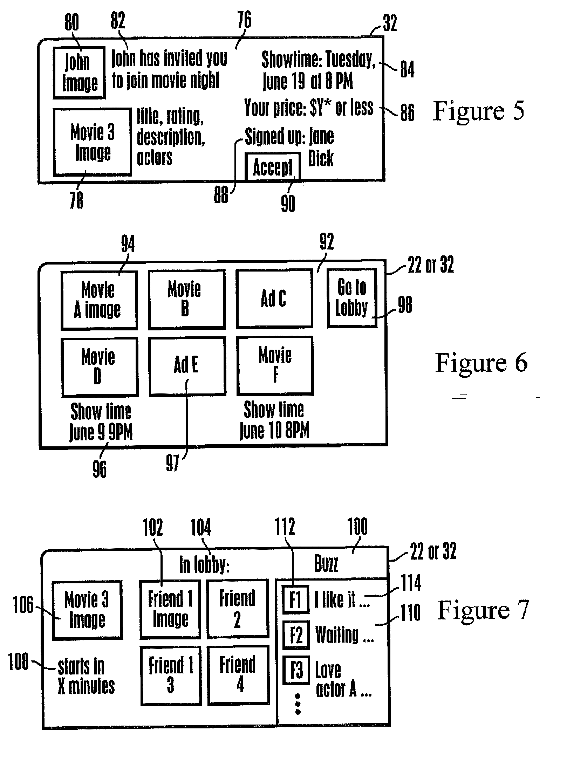

Figure 5 illustrates a UI 76 that can be presented on the display 32 of the guest devices belonging to the invitees entered by means of the UI 66 of Figure 4. As shown, the UI 76 can include an image 78 of the selected movie along with the movie title, rating, description, and actors list if desired. An image or icon or other symbol 80 associated with the host may also be presented, along with a message 82 to the effect that the [host name] has invited the recipient to join a movie night online.

The UI 76 of Figure 5 can also include the scheduled time and date 84 of the show, and if the movie is a pay movie, a cost 86. Note that in addition to the cost 86 the UI 76 may also include the explanation 66 shown in Figure 3 pertaining to the cost per participant being reduced with larger numbers of participants. Also, the UI 76 of Figure 5 can contain a list 88 of people who have already signed up to join the online movie night event so that the user knows the current estimated cost of the movie based on the number of people in the list 88 and the explanation 66 when included in the UI 76.

To elect to join the online movie night event, the user may select an "accept" selector element 90. This causes a message to be sent to the host device 12 in standalone mode and/or the content server 36 in third party server mode, which compiles a list of invitees who have agreed to participate. Periodically, the host device or server may send a reminder to the accepting guest devices or the accepting guest devices may self-generate reminders of the upcoming movie night start time, e.g., four, two, and one half hour before the event.

As described further below, the host device 12 and/or server 36 can construct a movie night site on the basis of the selected movie and the accepting invitees. For example, using demographics of the invitees that may be gleaned from the social networking site from which they were selected (when such is used to select them), targeted advertisements, e-coupons, and the like may be constructed or fetched from a storage correlating specific advertisements, etc. to demographics groups. Accepting invitees may also indicate proclivities and preferences on the social networking site, and in addition to or in lieu of demographics, these proclivities and preferences can be correlated to specific products and services and advertisements therefor. A recommendation engine may also generate a list of recommended movies based on the selected movie according to content recommendation principles known in the art, e.g., people who liked movie 3 are likely to want to see movies A, B, and C.

With the above in mind, a theater site showing clips of recommended movies and/or thumbnails of recommended movies may be compiled and the address of the site (such as a hyperlink to the site) provided to the host device 12 for dissemination thereof to the guest devices of accepting invitees, or provided to the guest devices of accepting invitees directly. Such a site is shown in Figure 6, discussed further below. Also, a lobby site may be constructed showing clips and/or thumbnails of targeted advertisements that may be purchased online, e.g., an advertisement for a pizza delivery store near the home of an accepting invitee (as indicated, for instance, by the invitee's profile on the social networking site form which the invitee was selected) along with a discount e-coupon for a pizza may be presented in the lobby site. The address of the lobby site such as but not limited to a hyperlink thereto may be provided to the movie night attendees. An example lobby site is shown in Figure 7 and discussed further below.

Accordingly and turning now to Figure 6, a theater page 92 may be presented on a host or guest device display showing thumbnails 94, including still images and live video streams, of movies other than the selected movie, in some embodiments as provided by a recommendation engine. Note that two of the thumbnails 94 (for movies D and F) further indicate at 96 a future movie night time for the movie, indicating that an online movie night event has also been scheduled for those movies. A user can select to join these additional online movie night events by, e.g., clicking on the associated thumbnail 94. As well, targeted advertising thumbnails 97 such as advertisements, e-coupons, and the like may be presented in the theater page 92 and can be selected by a viewer to attain further information on the related products, and/or to purchase the related products for delivery if desired to the viewer's home.

A "go to lobby" selector element 98 may also be provided in the theater page 92 which when selected causes the lobby page 100 of Figure 7 to appear on the display of the selecting user. The lobby page 100 may include images 102 of accepting invitees who also are viewing the lobby page 100 as indicated by the "in lobby" message 104. An image 106 of the selected movie, along with a countdown 108 to its start, may also appear on the lobby page 100 to remind viewers in the lobby when the show will begin. While the viewers are assembled at the lobby page 100 waiting for the movie to start, they may chat by means of viewing a chat window and inputting comments if desired. As shown, the chat window 110 may include images or other symbols 112 representing the people in the chat room 110 along with their comments 114.

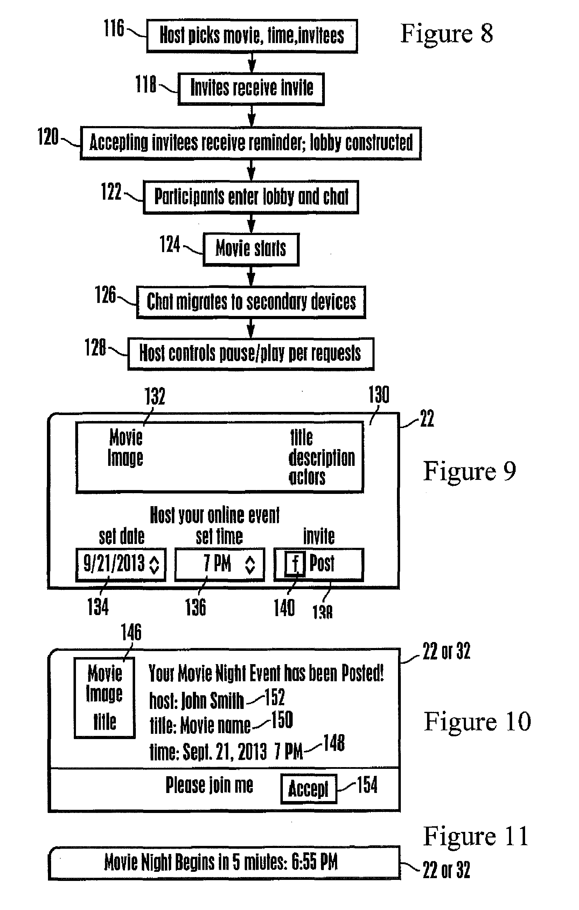

Figure 8 illustrates the above principles in flow chart form. Commencing at block 116, the host using the host device 12 selects the movie, show time, and invitees. The invitees receive their invitations at block 118 and at block 120 accepting invitees can receive a reminder. The lobby and theater pages are constructed according to principles above.

Block 122 indicates that accepting guests, a few minutes or a few hours before the scheduled screen time, can enter the lobby page 100 of Figure 7 and chat if desired. Note that prior to the start time, reminder pay boxes may be presented on the displays of invitees who have not yet paid. The pay boxes are configured for entering accounting data as discussed previously so that each accepting invitee pays for the movie online before the movie start time. Failure to pay may result in the movie not being sent to the device of the non-paying user.

The movie starts at the scheduled start time at block 124 by, e.g., sending a video stream from a movie provider to each guest device and to the host device 12 (pending payment when appropriate). When the movie starts the chat window 110 of Figure 7 may migrate to the display of a secondary device away from the host or guest device screening the movie. For example, if an invitee is watching the movie on a laptop the chat window may open on a nearby PDA of the invitee. The host device 12, but not the guest devices, may be given control of play of the movie including pause and play and if desired trick play modes at block 128. Attending guests may request the host, via the chat window for example, to pause the movie.

Figures 9-11 show additional Uls that may specific to third party server applications. Once a host has selected a movie as described above by, e.g., accessing a movie list on the content server 36, a UI 130 may be presented on the display of the host device 12 showing an image 132 related to the movie along with title, rating, description, and actor list if desired. Date and time boxes 134, 136 are provided into which the host may enter the start date and time for the movie using numeric keys on a keyboard or using up and down arrows as shown, or by other input method. Selecting a "post" selector 138 causes invitations to be transmitted to devices associated with users in a group that may be represented by an icon 140 as shown. For instance, friends on a social networking site may be sent invitations when the selector 138 is selected.

After the post selector is manipulated in Figure 9, a UI 144 may appear on the host and/or guest display as shown in Figure 10 showing an image 146 related to the movie along with title, rating, description, and actor list if desired. Date and time information 148 is presented along with the movie name 150 and host name 152. For guest devices an "accept" selector element 154 is presented on the UI 144 which can be selected to join the online movie night event according to principles discussed above.

Figure 11 shows a reminder screen 156 that can be periodically and automatically presented on the host and guest device displays to remind attendees that the movie will begin in "X" minutes, also showing current time if desired.

Thus, present principles are directed to online meeting places for events such as watching, as a distributed group, an online movie/online film festival, using a standalone application or integrated with a movie selection site such as Crackle. Reduced viewing fees may be provided for larger groups, and e-vendors can use the online meeting places to solicit food, online refreshments, etc. Advertising may also be provided and may be targeted to the participants, who typically are known. E-coupons, door prizes, and other inducements may be presented. Other events to which the meeting places can pertain include virtual weddings, graduation ceremonies and the like.

While the particular VIRTUAL MEETING LOBBY FOR WAITING FOR ONLNE EVENT is herein shown and described in detail, it is to be understood that the subject matter which is encompassed by the present invention is limited only by the claims.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. Device, comprising:
a computer processor;
a display controlled by the processor; and
a computer readable storage medium accessible to the processor and bearing instructions which when executed by the processor to cause the processor to:
present on the display a first user interface (UI) presenting a selector element which when selected provides an option to host, at a later time, an audio video event online;
present on the display date and time entry elements enabling a user to select a date and time the event is desired to start;
present on the display an invitee entry element enabling a user to enter invitees to the event;
send to the invitees event information along with an invitation to access the event online at the date and time date;
configure the device to access a lobby page on a computer network also accessible to accepting invitees, the lobby page including images of accepting invitees who also are viewing the lobby page, the lobby page including an image representing the event, the lobby page indicating a countdown to the time the event is desired to start, the lobby page also including a chat window facilitating computer chat among viewers of the lobby page.

2. The device of Claim 1, wherein the invitee entry element enables a user to select invitees from a social networking computer site.

3. The device of Claim 1, wherein the instructions when executed by the processor cause the processor to:
receive acceptances of the invitations and present indications thereof on the host device.

4. The device of Claim 1, wherein the first UI presents a price box informing a user of a cost of the movie.

5. The device of Claim 4, wherein the cost is a per participant cost and the first UI indicates that the per participant is reduced with larger numbers of participants.

6. The device of Claim 1, wherein the instructions when executed by the processor cause the processor to:
configure the device to access a theater page on a computer network also accessible to accepting invitees, the theater page showing thumbnails of events other than the selected event, at least one thumbnail being accompanied by an indication of a future event time for an event associated with the thumbnail indicating that an online event has also been scheduled for the event associated with the thumbnail.

7. Device, comprising:
a computer processor;
a display controlled by the processor; and
a computer readable storage medium accessible to the processor and bearing instructions which when executed by the processor to cause the processor to:
responsive to receiving an invitation from a host device to attend an online event, present on the display a first user interface (UI) including an image related to the online event along with an image or icon or other symbol associated with a user host of the host device and a message that the host has invited a user associated with the device having a display associated with the processor to join the online event;
the first UI also including a scheduled time of the event, a list of people who have already accepted to join the event, and an "accept" selector element selectable to cause a message to be sent indicating acceptance of the invitation.

8. The device of Claim 7, wherein the first UI includes an indication of a cost to view the event and an indication that the cost is reduced with larger numbers of participants.

9. The device of Claim 7, wherein the instructions when executed by the processor cause the processor to:
present on the display a reminder of the start time prior to the start time.

10. The device of Claim 7, wherein the instructions when executed by the processor cause the processor to:
configure the device to access a lobby page on a computer network also accessible to accepting invitees, the lobby page including images of accepting invitees who also are viewing the lobby page, the lobby page including an image representing the event, the lobby page indicating a countdown to the time the event is desired to start, the lobby page also including a chat window facilitating computer chat among viewers of the lobby page.

11. The device of Claim 1 or 10, wherein the event is an online movie.

12. The device of Claim 7, wherein the instructions when executed by the processor cause the processor to:
configure the device to access a theater page on a computer network also accessible to accepting invitees, the theater page showing thumbnails of events other than the selected event, at least one thumbnail being accompanied by an indication of a future event time for an event associated with the thumbnail indicating that an online event has also been scheduled for the event associated with the thumbnail.

13. The device of Claim 6 or 12, wherein the theater page includes at least one advertisement targeted to an invitee to the audio video event online at least in part using information related to the invitee.

14. The device of Claim 13, wherein the information related to the invitee is obtained from a social networking site.

15. Method comprising:
using a host computing device, selecting a movie, a show time, and one or more invitees;
responsive to selecting one or more invitees, sending to one or more respective guest devices associated with the respective one or more invitees an invitation to join in viewing the movie at the show time;
responsive to an invitee returning an acceptance of an invitation to join in viewing the movie, presenting on the host device information indicating that the invitee has accepted to join;
before the show time, configuring the host device to access a lobby page hosted on a network, the lobby page including information related to the movie; and
at the show time, stream the movie to accepting invitees.
